# EUROPEAN PATENT APPLICATION

(11) **EP 1 683 570 A1**
(43) Date of publication of application: **26.07.2006**
(21) Application number: 04791966.7
(22) Date of filing: 01.10.2004
(51) Int. Cl.: B01J 19/00, G01N 37/00

(54) **METHOD OF CONTROLLING FLUID**

(30) Priority: 03.10.2003 JP 2003345586
(71) Applicant: DAIKIN INDUSTRIES, LTD., Osaka-shi, Osaka 530-8323 (JP)
(72) Inventor: NAGAI, H., c/o NAT. INST. ADV. IND. SCI. & TECH., Ikeda-shi, Osaka 563-8577 (JP); WAKIDA, S., c/o NAT. INST. ADV. IND. SCI. & TECH., Ikeda-shi, Osaka 563-8577 (JP); TAKAHASHI, Junko, c/o DAIKIN INDUSTRIES, LTD., Tsukuba-shi, Ibaraki 305-0841 (JP)
(74) Representative: HOFFMANN EITLE
(86) International application number: PCT/JP2004/014499
(87) International publication number: WO 2005/032707

(57) **Abstract**

There is provided a method of controlling a flow of a fluid in a microchannel, in which a part of a surface of the microchannel is a hydrophilization portion comprised of a substance being capable of decreasing a contact angle of water by irradiation of light, and the method comprises (1) irradiating the hydrophilization portion with light to decrease a contact angle of water of its surface (hydrophilization step), (2) releasing a substance for increasing a contact angle of water from a material for controlling a contact angle of water which contains the substance for increasing a contact angle of water which provides a surface having a contact angle of water larger than that of the hydrophilization portion after the decreasing of a contact angle of water (releasing step), and (3) bringing the released substance for increasing a contact angle of water into contact with the surface of the hydrophilization portion to adhere the substance for increasing a contact angle of water to the surface, thereby increasing the contact angle of water of the surface of the hydrophilization portion (hydrophobilization step). Also there is provided a valve utilizing the mentioned method. Thus, there are provided a fluid control method and valve which enable hydrophobilization and hydrophilization to be easily carried out in a noncontact manner in a microchannel without using a moving part.

## Description

### TECHNICAL FIELD

The present invention relates to a method of controlling a flow of a fluid, for example, a method of controlling a flow of a fluid in a microchannel which is provided on a lab-on-α-chip to be used for analysis of a biosubstance, etc. and relates to an optical switching valve utilizing this control method.

### BACKGROUND ART

On a subminiature biochemical analysis device (micro device) of several centimeters to several millimeters which is represented by a lab-on-a-chip are provided a micro-pump, micro reactor, micro electrode, micro heater, control circuit, switching valve, etc. In order to connect to such a reactor and a reservoir so as to introduce a sample to be tested to the reactor and supply a reagent and a washing liquid from the reservoir, there is provided a microchannel of micron order width.

There are various liquids for analysis, for example, a solution containing blood, protein, gene or the like, a solution containing a solid component such as microorganism, plant cell or animal cell, environmental water and water extracted from soil which contain various chemical substances, and further various reagents, buffer solutions, washing water, etc. to be used for analysis thereof.

Also a switching valve is necessary for controlling a flow of a solution passing through a microchannel. Micro-switching valves proposed are as follows.

### (1) MEMS (Micro Electro Mechanical System) type

A method of shutting off a flow by pressing a microchannel with air pressure. This method is applicable irrespective of fluids, but is not suitable for integration.

### (2) Differential pressure type

A method of controlling a flow of a fluid by providing a differential pressure in a microchannel. In this method, production of a valve is relatively easy, but controlling is complicated.

### (3) Sol/gel phase transition type (Y. Shirasaki et al., Micro Total Analysis System 2 925-927 (2002))

A method of controlling a flow of a fluid by mixing a sol portion in the fluid and locally applying laser beam to cause gelling. In this method, complicated control can be carried out, but a sol must be mixed in a solution to be used.

### (4) pH sensitive gel type (D. J. Beebe et al., Nature 18, 404, 588 (2000))

A method of controlling a flow of a fluid by providing, in a passage of a fluid, a gel which undergoes expansion and shrinkage depending on a pH value and thus changes its volume, and changing a pH value of the fluid. In this method, since gels having different pH sensitivity can be prepared, control of a flow in plural directions can be carried out, but it is necessary to control a pH value in the fluid.

### (5) Heat sensitive resin type (T. Saitoh et al., Analytical Science 18, 203 (2002))

A method of controlling a contact angle of water of a surface by treating the surface with poly(N-isopropylacrylamide) which is a heat sensitive resin, and applying heat thereto. According to this method, a contact angle of water of the surface becomes about 30 degrees at a temperature of 32° to 33°C or more, and 70 degrees at a temperature lower than that. In this method, heat can be used as means to control, but it is necessary to always adjust a temperature of the portion by heating and cooling.

Also in a field other than a microchannel, there is known a technique of making a surface of an article hydrophilic and hydrophobic alternately by applying an external energy to change a contact angle of water (JP2001-158606A). This is a technique of making the article surface hydrophilic (decreasing a contact angle of water) by irradiating a photocatalytic semiconductor material (for example, titanium oxide and the like) with light and then making the article surface hydrophobic again by applying a mechanical shock (friction force) on the article surface. This patent publication says that switching of hydrophilization and hydrophobilization can be carried out at high speed.

### DISCLOSURE OF INVENTION

### (Problem to be Solved by the Invention)

As mentioned above, there are various proposals to mechanically, optically and thermally control a flow of a fluid in a micro device. However any of those proposals have room for improvement, and production and control of a micro device is not always carried out easily.

An object of the present invention is to provide a method of controlling a flow of a fluid, for example, in a microchannel by utilizing chemical properties of the fluid to be used.

An another object of the present invention is to provide a valve which can be easily provided in a microchannel and assures easy control.

### (Means to Solve the Problem)

Directing attention to degrees of hydrophilicity and hydrophobicity of a fluid to be used for analysis, the present inventors made studies as to, for example, whether or not a flow of a fluid in a microchannel can be controlled by utilizing properties of the fluid, and reached the present invention.

Namely, the present invention relates to a method (the first invention) of controlling a flow of a fluid which is characterized in that at least a part of a surface of a fluid passage is comprised of a substance being capable of changing a contact angle of water by irradiation of light, and the contact angle of water of the substance for changing a contact angle of water is controlled so as to change the contact angle of water of its surface, thereby controlling a flow of the fluid.

The second invention is a realization of the first invention for application to a microchannel and relates to a method of controlling a flow of a fluid in a microchannel which is characterized in that at least a part of a surface of the microchannel is a hydrophilization portion comprised of a substance being capable of decreasing a contact angle of water by irradiation of light, and the hydrophilization portion is irradiated with light to decrease a contact angle of water of the surface thereof (hydrophilization step).

The present invention also relates to a method (the third invention) of controlling a flow of a fluid in a microchannel in which at least a part of a surface of the microchannel is a hydrophilization portion comprised of a substance being capable of decreasing a contact angle of water by irradiation of light; and the method comprises:
(1) irradiating the hydrophilization portion with light to decrease a contact angle of water of the surface thereof (hydrophilization step),
(2) releasing a substance for increasing a contact angle of water from a material for controlling a contact angle of water which contains the substance for increasing a contact angle of water which provides a surface having a contact angle of water larger than that of the hydrophilization portion subjected to decreasing of a contact angle of water (releasing step), and
(3) bringing the released substance for increasing a contact angle of water into contact with the surface of the hydrophilization portion to adhere the substance for increasing a contact angle of water to the surface of the hydrophilization portion, thereby increasing the contact angle of water of the surface (hydrophobilization step).

Further the present invention relates to a valve (the fourth invention) provided in a passage of a fluid, wherein a part of an inner wall surface of the passage is comprised of a substance being capable of controlling a contact angle of water by irradiation of light, and a fluid resistance in the fluid passage is controlled by controlling a contact angle of water of the inner wall surface comprised of the substance being capable of controlling a contact angle of water so as to differ from a contact angle of water of other inner wall surface.

In the fourth invention, it is preferable that the substance being capable of controlling a contact angle of water is a substance which is capable of exhibiting both of hydrophilic property and photocatalytic action, and especially titanium oxide is desired.

The fifth invention is a realization of the fourth invention for application to a microchannel and relates to a valve for a microchannel which is provided in the microchannel and has a hydrophobic portion and a hydrophilization portion, wherein the hydrophobic portion is made of a material for controlling a contact angle of water which can release a substance for increasing a contact angle of water by application of light or heat and the hydrophilization portion is made of a substance being capable of decreasing a contact angle of water by irradiation of light.

In the third invention, the passage of a fluid in a microchannel can be switched alternately by, subsequently to the hydrophobilization step (3), carrying out a step (re-hydrophilization step) (4) for decreasing the contact angle of water on the surface of the hydrophilization portion again by irradiation of light on the hydrophilization portion having the adhered substance for increasing a contact angle of water thereon, and further repeating the above-mentioned steps (2) to (4).

Preferred examples of the substance being capable of decreasing a contact angle of water by irradiation of light are substances having photocatalytic action, especially titanium oxide.

Suitable means to release the substance for increasing a contact angle of water from the material for controlling a contact angle of water is irradiation of light or heating.

Preferred as light is ultraviolet light, and particularly light in the form of laser beam is preferred. There may be used a method of taking out only light of ultraviolet wavelength using a band pass filter on a mercury lamp and irradiating only a desired portion with light using an optical fiber. Also with respect to the method of light irradiation, when a lens unit being capable of changing a focus of light source in the depth direction is used, control of hydrophilization and hydrophobilization can be carried out only by controlling the focus.

Further a hydrophilic portion and a hydrophobic portion can be selectively provided by selectively irradiating a specific region of the hydrophilization portion with light through a light-shielding pattern. Also a hydrophilic portion and a hydrophobic portion can be selectively provided by selectively applying light or heat on a specific region of the material for controlling a contact angle of water through a light-shielding pattern.

The material for controlling a contact angle of water which contains the substance for increasing a contact angle of water may comprise the substance for increasing a contact angle of water alone or may be used in the form of liquid or solid containing the substance for increasing a contact angle of water.

Preferred example of the material for controlling a contact angle of water is, for instance, polydimethylsiloxane containing the substance for increasing a contact angle such as a low molecular weight organosilicon compound.

When carrying out the control method of the present invention, it is preferable that portions other than the hydrophilization portion of the microchannel is made of the material for controlling a contact angle of water which contains the substance for increasing a contact angle of water.

The valves of the fourth and fifth inventions are useful for a micro device such as a lab-on-a-chip and for a microsensor.

In the present invention, the terms "hydrophilic" and "hydrophobic" are not specified by an objective numerical contact angle of water and are used as a relative concept and therefore should not be construed absolutely by a contact angle of water. Namely, a state before the hydrophilization step and a state after the hydrophobilization step of the present invention is assumed to be "hydrophobic" and a state after the hydrophilization step, namely before the hydrophobilization step is assumed to be "hydrophilic".

### BRIEF DESCRIPTION OF DRAWINGS

Fig. 1 is a diagrammatic partial plan view of a micro device to which the first invention is applied.
Fig. 2 is a cross-sectional view of X-X of Fig. 1.
Fig. 3 is a diagrammatic cross-sectional view for explaining the steps of the third invention.
Fig. 4 is a cross-sectional view for explaining an another embodiment of the third invention.
Fig. 5 is a diagrammatic plan view for explaining a microchannel of a micro device for testing which is used in Example 2.
Fig. 6 is a graph showing a change of a contact angle of water with a lapse of ultraviolet irradiation time which is measured in Example 3.
Fig. 7 is a graph showing a change of a contact angle of water with a lapse of ultraviolet irradiation time which is measured in Example 4.

### BEST MODE FOR CARRYING OUT THE INVENTION

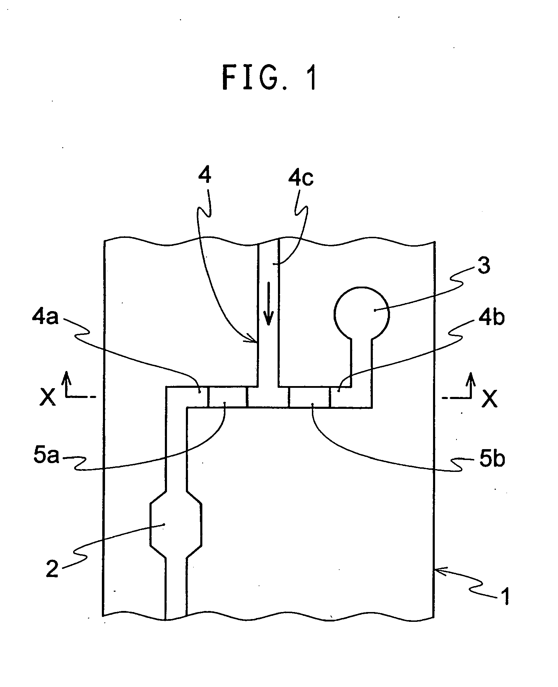

Explained below by means of drawings is the case (namely, the second invention) of realizing the control method of the first invention for application to a microchannel. Fig. 1 is a diagrammatic partial plan view of a micro device 1 which is provided with a reactor 2, a buffer reservoir 3 and a microchannel 4 connecting them each other. The microchannel 4 is T-shaped or Y-shaped channel and comprises a channel 4a connecting to the reactor 2, a channel 4b connecting to the buffer reservoir 3 and a channel 4c connecting to those channels 4a and 4b. The microchannel is so designed that the sample fluid is supplied by inclination from the topside in the drawing. The microchannels 4a and 4b are provided with surface layers 5a and 5b, respectively which are comprised of a substance being capable of decreasing a contact angle of water (substance for decreasing a contact angle of water) by irradiation of light.

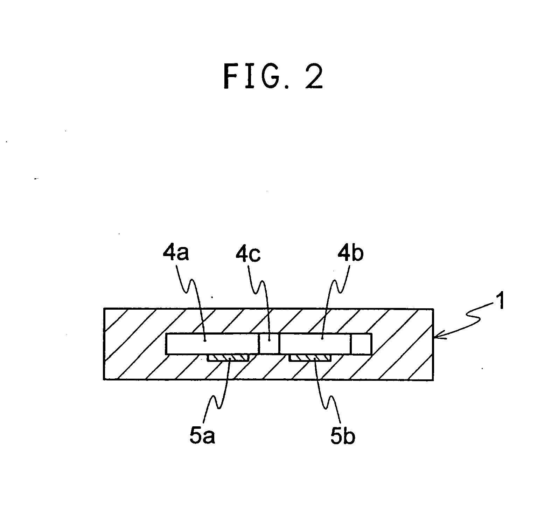

Fig. 2 is a cross-sectional view of X-X of Fig. 1, and the surface layers 5a and 5b constitute a part of the microchannel 4.

The micro device 1 is usually made of glass and is hydrophilic. The surface layers 5a and 5b comprised of a substance for decreasing a contact angle of water is hydrophobic before the irradiation of light (hydrophilization treatment). In the buffer reservoir 3 is stored a hydrophilic buffer solution.

In such conditions, a hydrophilic fluid flowing from the microchannel 4c is hindered from passing at the hydrophobic surface layers 5a and 5b having a large contact angle of water due to a surface tension. Also the buffer solution is hindered at the surface layer 5b from flowing into the channel 4a.

Then in the case of supplying a hydrophilic fluid to the reactor 2, the hydrophobic surface layer 5a comprised of a substance for decreasing a contact angle of water is made hydrophilic by irradiation of light while a fluid is absent in the microchannel 4. Thereby a hydrophilic fluid coming from the channel 4c is hindered by the hydrophobic surface layer 5b from flowing toward the buffer reservoir 3, but since the surface layer 5a provided on the channel 4a is hydrophilic, the fluid passes through the surface layer 5a without any resistance and flows into the reactor 2. Then in order to supply the buffer solution to the reactor 2, the surface layer 5b is irradiated with light to be hydrophilic.

Examples of the substance being capable of decreasing a contact angle of water (a substance for decreasing a contact angle of water) by irradiation of light are, for instance, photocatalytic semiconductor substances becoming hydrophilic by irradiation of light energy which are disclosed in Japanese Patent No. 2756474 and No. 2865065. Preferred examples of the photocatalytic semiconductor substances are, for instance, anatase-type titanium dioxide, rutile-type titanium dioxide, stannic oxide, zinc oxide, dibismuth trioxide, tungsten trioxide, ferric oxide, strontium titanate and the like. Among them, titanium oxide, especially anatase-type titanium dioxide is preferred since the hydrophilization treatment is easy.

For forming a surface layer of the substance for decreasing a contact angle of water, there can be adopted, for example, as disclosed in Japanese Patent No. 2756474 and No. 2865065, a sol/gel method, a chemical vapor deposition method and a method of dispersing in a binder such as a silica or silicone resin.

Examples of the irradiation light are ultraviolet ray (wavelength of from 200 to 420 nm), etc. A wavelength and strength of light to be used are optionally selected in relation to the substance for increasing a contact angle of water and the material for controlling a contact angle of water mentioned infra. Particularly preferred is ultraviolet ray from the viewpoint of a releasing rate of the substance for increasing a contact angle of water and easy manufacturing of device. Irradiation of ultraviolet ray may be carried out with an ultraviolet lamp or a mercury lamp and also may be in the form of laser beam by using a laser generator.

A degree of hydrophilicity may be selected depending on a contact angle of water after the hydrophobilization and purpose of application. The measure of the hydrophilicity is preferably not more than 30 degrees, further preferably not more than 20 degrees, particularly preferably not more than 10 degrees in a contact angle of water.

The first invention can be used for control of not only a fluid in a microchannel but also a fluid flowing in a passage of flow in various micro devices.

In the second invention, by irradiating the hydrophilization portion with light through a light-shielding pattern, only a specific portion of the hydrophilization portion can be irradiated with light and can be hydrophilic. Namely, it is possible that the whole microchannel is comprised of the hydrophilization portion and only a specific portion is made hydrophilic by irradiation of light using a light-shielding pattern, thereby controlling a flow of a fluid.

As mentioned above, according to the first and second inventions, a How of a fluid in a microchannel can be controlled simply by irradiation of light.

The third invention is the method of making the surface layer subjected to hydrophilization by the above-mentioned hydrophilization step hydrophobic in a microchannel having the same structure as in the second invention.

Namely, the third invention relates to the method of controlling a flow of a fluid in a microchannel, in which at least a part of a surface of the microchannel is a hydrophilization portion comprised of a substance being capable of decreasing a contact angle of water by irradiation of light; and the method comprises:
(1) irradiating the hydrophilization portion with light to decrease a contact angle of water of the surface thereof (hydrophilization step),
(2) releasing a substance for increasing a contact angle of water from a material for controlling a contact angle of water which contains the substance for increasing a contact angle of water which provides a surface having a contact angle of water larger than that of the hydrophilization portion subjected to decreasing of a contact angle of water (releasing step), and
(3) bringing the released substance for increasing a contact angle of water into contact with the surface of the hydrophilization portion to adhere the substance for increasing a contact angle of water to the surface, thereby increasing the contact angle of water of the surface of the hydrophilization portion (hydrophobilization step).

In the releasing step (2) of the third invention, there is used the material for controlling a contact angle of water which contains the substance for increasing a contact angle of water which provides a surface having a contact angle of water larger than that of a hydrophilic surface of an article to be treated.

The substance for increasing a contact angle of water which is used in the releasing step (2) is not limited particularly as far as it provides a surface having a contact angle of water larger than that of a hydrophilic surface of an article to be treated. The substance may be an organic substance or an inorganic substance or may be a high molecular weight substance or a low molecular weight substance. Also the substance may be a liquid or a solid. Also a degree of increase in a contact angle of water (a contact angle of water of the surface provided by the substance for increasing a contact angle of water) is a relative one and may be optionally selected depending on a contact angle of water on the surface of the article to be treated and purpose of application.

The contact angle of water increased by this substance for increasing a contact angle of water is not limited particularly, but it is desirable to select a substance which increases the contact angle of water by at least 5 degrees, preferably 20 degrees, further preferably 40 degrees to clearly discriminate between hydrophilicity and hydrophobicity.

It is the material for controlling a contact angle of water that contains this substance for increasing a contact angle of water and can release the substance. Such a material for controlling a contact angle of water is also selected optionally in relation to physical properties of the substance for increasing a contact angle of water. The material for controlling a contact angle of water also may be an organic material or an inorganic material and may be a liquid or a solid.

An amount of the substance for increasing a contact angle of water in the material for controlling a contact angle of water varies depending on kind of the substance, easiness of releasing, a method of releasing, etc. and may be optionally selected.

The method of releasing the substance for increasing a contact angle of water from the material for controlling a contact angle of water is not limited particularly, and there are physical methods such as a method of applying vibration or pressure and a method of applying heat; chemical methods such as a method of chemical reaction and a method of extraction; and optical methods such as irradiation of light and electromagnetic wave. Particularly preferred releasing method is a method of applying energy.

Preferred as the energy to be applied are light energy, thermal energy or electromagnetic energy (including electron beam) since those energies can be applied in a noncontact manner.

Example of light is ultraviolet ray (wavelength of from 200 to 420 nm). A wavelength and strength of light to be used are optionally selected in relation to the substance for increasing a contact angle of water and the material for controlling a contact angle of water. Particularly preferred is ultraviolet ray from the viewpoint of a releasing rate of the substance for increasing a contact angle of water and easy manufacturing of device. Irradiation of ultraviolet ray may be carried out with an ultraviolet lamp or a mercury lamp and also may be in the form of laser beam by using a laser generator.

With respect to heat, those generated from various heat sources can be used. Heat can also be generated by irradiation of infrared rays. Further heat source may be embedded in the material for controlling a contact angle of water. A heating temperature and time may be optionally selected in relation to the substance for increasing a contact angle of water and the material for controlling a contact angle of water.

Examples of the electromagnetic wave are microwave, electron beam, γ-ray, X-ray and the like, which accelerate heat generation and excite a molecular motion, thereby releasing the substance for increasing a contact angle of water.

The released substance for increasing a contact angle of water is brought into contact with the hydrophilic surface of the article to be treated in the following hydrophobilization step (3) and is adhered to the hydrophilic surface for hydrophobilization (increase in a contact angle of water).

The method of bringing the substance into contact with the hydrophilic surface is not limited particularly, and natural phenomena such as diffusion and convection may be used or forced flowing may be adopted. When the substance for increasing a contact angle of water has been subjected to ionization, a voltage may be applied. A contact time may be optionally selected depending on an energy applying method to be used, kind of the article and substance and contacting method.

An adhering amount and adhesion state vary depending on purpose of application; kind of the article to be treated, kind and amount of the substance for increasing a contact angle of water, etc. and cannot be specified unconditionally. The substance may be applied all over the hydrophilic surface of the article or may be applied partly.

Subsequently to the hydrophobilization step (3) of the third invention, by carrying out a step (4) for decreasing again the contact angle of water on the surface of the hydrophilization portion (re-hydrophilization step) by light irradiation on the hydrophilization portion to which the substance for increasing a contact angle of water was adhered and further by repeating the steps (2) to (4), the passage of a fluid in a microchannel can be switched alternately (switching function). Examples of the material constituting the microchannel are organic materials, for instance, resins such as silicone resin (for example, polyorganosiloxane and the like), acrylic resin (for example, polyacrylate, polymethyl methacrylate and the like), polystyrene, polyolefin (for example, polyethylene, polypropylene and the like), polyester (polyethylene terephthalate and the like), polycarbonate (for example, polyisopropylidene diphenyl carbonate and the like), fluorine-containing resins (for example, polytrifluoroethylene, polytetrafluoroethylene and the like) and polyhexamethylene adipamide and elastomers such as silicone rubber and fluorine-containing rubber, and inorganic materials, for instance, glass, quartz, alumina and zirconia.

Nonlimiting examples of the substance for increasing a contact angle of water are organic substances, for instance, organosilicon compounds such as dimethylsiloxane terminated with dimethylvinyl group at its end (68083-19-2, CAS number, hereinafter the same), tetrakis(trimethylsilyloxy)silane (3555-47-3) and copolycondensation product of dimethylsiloxane and methylhydrosiloxane terminated with trimethylsilyl group at its end (68037-59-2); organic compounds which have hydrophilic group and hydrophobic group in one molecule such as ethylene glycol (107-21-1), catechol (120-80-9) and isovaleric acid aldehyde (590-86-3).

Nonlimiting examples of the material for controlling a contact angle of water are organic substances, for instance, organosilicon compounds such as polydimethylsiloxane.

Those materials may be optionally selected depending on purpose of application and conditions in use thereof, and used in combination thereof.

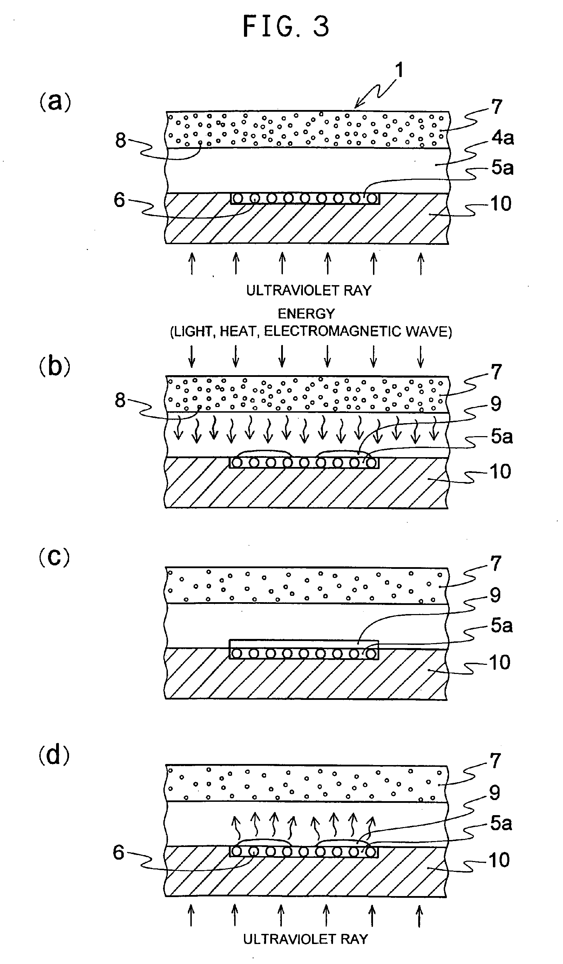

An embodiment of the third invention is explained below by means of Fig. 3 using hydrophobic organosilane as the substance for increasing a contact angle of water, polydimethylsiloxane (PDMS) as the material for controlling a contact angle of water and ultraviolet ray as energy. The present invention is not limited to such an embodiment, and other embodiments can also be executed by changing a material, substance, applying energy, etc. to other ones if the concept of the present invention is followed.

Fig. 3 is a process drawing diagrammatically showing the hydrophilization step (Fig. 3(a)), releasing step (Fig. 3(b)), hydrophobilization step (Fig. 3(c)) and re-hydrophilization step (Fig. 3(d)).

In Fig. 3(a), the micro device 1 comprises the material (PDMS) 7 for controlling a contact angle of water containing the substance (organosilane) 8 for increasing a contact angle of water and the glass substrate 10 on which the hydrophilic surface 5a is formed, thereby forming the microchannels 4a to 4c.

Fig. 3(a) is a view for explaining the hydrophilization step (1) explained in the second invention. The hydrophobic surface layer 5a which comprises titanium oxide 6 and is formed on the glass substrate 10 is irradiated with ultraviolet ray to make the surface layer 5a hydrophilic. It is desirable that the ultraviolet ray irradiation is carried out from the side of glass substrate 10 so that the substance 8 for increasing a contact angle of water is not released from the material (PDMS) 7 for controlling a contact angle of water.

The releasing step (2) is initiated by applying energy to the PDMS. The applying energy is not limited particularly, and energy enough for enabling organosilane to be released suffices. Preferred as the energy are light energy, thermal energy and electromagnetic energy. From the viewpoint of easy control, light energy, especially ultraviolet ray is preferred.

Organosilane 8 is released from the material (PDMS) 7 for controlling a contact angle of water subjected to application of energy. The released organosilane comes into contact with the surface layer 5a subjected to hydrophilization treatment which contains titanium oxide, and starts adhering to the surface layer. Thus the hydrophobic adhesion layer 9 is formed (Fig. 3(b)).

Finally as shown in Fig. 3(c), the surface of the surface layer 5a is partly or wholly covered with the hydrophobic adhesion layer 9 of organosilane to make the surface of the surface layer 5a hydrophobic (completion of the hydrophobilization step).

In Fig. 3, the material 7 for controlling a contact angle of water and the surface layer 5a are arranged faced to each other, but the material 7 for controlling a contact angle of water may be shifted slightly apart from the surface layer 5a (or 5b) without facing to each other. In this case, the releasing step (2) and the hydrophobilization step (3) can be carried out independently at separate places. Accordingly the releasing step (2) can be carried out by heating with a heater or using infrared ray. Also a liquid material can be used as the material 7 for controlling a contact angle of water.

At this stage, initial state (hydrophobic) → hydrophilization step (hydrophilic) → hydrophobilization step (hydrophobic) can be accomplished. In order to repeat this cycle, the hydrophilization step may be carried out again after the hydrophobilization step.

In order to make the article surface subjected to hydrophobilization hydrophilic again, as shown in Fig. 3(d), light energy (irradiation of ultraviolet ray) is applied to the titanium oxide 6 in the surface layer 5a of the article from the side of the glass substrate 10 so that energy is not applied to the PDMS, thereby letting the titanium oxide exhibit a photocatalytic action. The catalytic action of the titanium oxide 6 is a photolysis action which quickly decomposes and removes the organosilane adhesion layer 9 to return the surface layer 5a to the hydrophilic state.

When for irradiation of light energy, an irradiation method being capable of controlling a focus in the depth direction is adopted, since a focus of laser can be placed on the surface layer 5a, in the hydrophilization step and the re-hydrophilization step, the irradiation may be carried out from the PDMS side while placing a focus on the surface layer 5a.

By carrying out the step of Fig. 3(b) and then the step of Fig. 3(c) on the surface layer 5a subjected to re-hydrophilization, the hydrophobilization can be carried out again. The hydrophobilization of the surface layer 5a can be carried out repeatedly until the substance for increasing a contact angle of water is released no more.

Also a hydrophobic region can be selectively formed by selectively carrying out irradiation of light and heating. Example of means therefor is, for instance, a method of using a shielding pattern. For example, a shielding pattern is placed on the material (for example, a PDMS sheet) for controlling a contact angle of water, and light or heat is applied only on a portion required to be subjected to hydrophobilization to release the substance (for example, organosilane) for increasing a contact angle of water from the applied portion of the PDMS sheet, thereby enabling the hydrophilic surface layer to be hydrophobic selectively.

In an another embodiment of the third invention, a switching action can be accomplished by alternately changing a region to be irradiated with light energy.

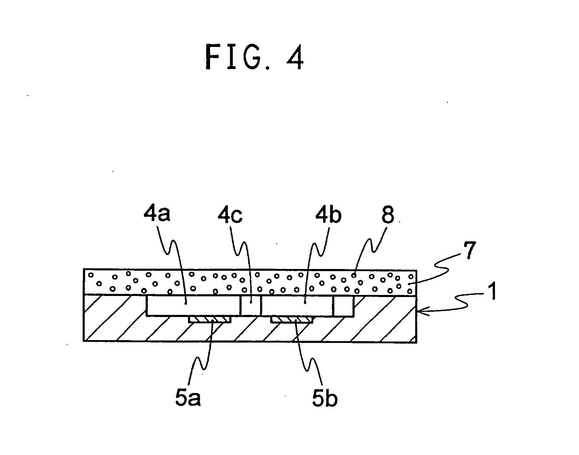

Namely, in Fig. 2, the top surface of the micro device 1 is comprised of the material 7 for controlling a contact angle of water containing the substance for increasing a contact angle of water as shown in Fig. 4. In this embodiment, irradiation of ultraviolet ray, preferably laser beam is carried out only on a region A from the side of the material 7 for controlling a contact angle of water while in the embodiment shown in Fig. 3, irradiation of ultraviolet ray for the hydrophilization is carried out from the side of the glass substrate 10. The applied ultraviolet ray acts to release the substance 8 for increasing a contact angle of water from the material 7 for controlling a contact angle of water and at the same time, activates a catalytic activity of the surface layer 5a, and thereby the substance for increasing a contact angle of water adhered to the surface layer 5a is immediately decomposed and the surface layer 5a becomes hydrophilic. On the other hand, though the released substance 8 for increasing a contact angle of water reaches the surface layer 5b not irradiated with ultraviolet ray, since a catalytic activity of the surface layer 5b is not activated, the substance adheres thereto as it is to further enhance hydrophobicity of the surface layer 5b. As a result, a difference in a contact angle of water between the surface layer 5a and the surface layer 5b is further increased, and selectivity of the passage of a fluid is enhanced.

Then when ultraviolet ray is selectively applied on a region B, a catalytic activity of the surface layer 5b is activated, and like the manner mentioned above, the substance 8 for increasing a contact angle of water is decomposed and the surface layer 5b becomes hydrophilic. On the other hand, since the surface layer 5a is not irradiated with ultraviolet ray, a catalytic activity thereof is not activated and the substance 8 for increasing a contact angle of water generated from the material 7 for controlling a contact angle of water of the region B adheres to the surface layer 5a to make its surface hydrophobic. As a result, the surface layer 5b becomes hydrophilic and the surface layer 5a becomes hydrophobic. Thus the passage of a fluid can be switched (switching function).

It is a matter of course that by irradiation of ultraviolet ray again on the region A, hydrophilization of the surface layer 5a subjected to hydrophobilization can be carried out (at the same time, hydrophobilization of the surface layer 5b occurs).

When looking at the surface layer 5a only, this embodiment comprises the hydrophilization step (1), releasing step (2) (from the region B) and hydrophobilization step (3), and further it can be said that the third invention, in which the re-hydrophilization step (4) may be carried out, is executed.

If the irradiation time is too long, there is a case where a releasing amount of the substance 8 for increasing a contact angle of water exceeds resolution of the surface layers 5a and 5b. Therefore it is preferable from the viewpoint of enhancement of switching function that the irradiation time is a relatively short period of time, for example, the irradiation time at one spot (min/spot) is from 0.5 to 1.5 min/spot.

According to the third invention, a specific portion in a microchannel can be controlled repeatedly to become hydrophilic and hydrophobic alternately, and thus a so-called switching function can be accomplished. The third invention is useful, for example, as a method of controlling a direction of flow and a flow rate of a fluid in an element such as a switching valve.

The fourth invention relates to the valve utilizing the control method of the first invention. The valve is provided in a passage of a fluid, and a part of inner wall surface of the passage is comprised of a substance being capable of controlling a contact angle of water by irradiation of light. A fluid resistance in the fluid passage is controlled by controlling the contact angle of the inner wall surface comprised of the substance being capable of controlling a contact angle of water so as to differ from the contact angle of other part of the inner wall surface.

The fifth invention relates to the valve realized by the control method of the third invention and the valve is provided in a microchannel. The valve is a microchannel valve having a hydrophobic portion and a hydrophilization portion, and the hydrophobic portion is made of a material for controlling a contact angle of water being capable of releasing a substance for increasing a contact angle of water by applying light or heat thereto and the hydrophilization portion is made of a substance being capable of decreasing a contact angle of water by light irradiation.

The basic structure of the valve of the fifth invention is as shown in Fig. 3(a) and Fig. 4. When this structure is adopted, the valve functions as a valve having a switching function as shown in Fig. 1.

The valves of the fourth and fifth inventions are useful as a valve for a micro device as explained in Fig. 1 or as a valve for a microsensor.

### EXAMPLE

The present invention is then explained by means of examples, but is not limited to those examples.

### EXAMPLE 1

Titanium oxide was applied on a quartz glass substrate in a thickness of 500 nm by vapor deposition to produce a quartz glass substrate coated with titanium oxide. The contact angle of water of this titanium oxide coating surface was 70 degrees. This substrate was put in a polystyrene Petri dish, followed by sealing, and was irradiated with ultraviolet ray (black light having a wavelength of 254 nm, light source: 8W) at room temperature (25°C) for 10 minutes with an ultraviolet lamp (Spectroline ENF280C available from Spectronics Corp.). Then the contact angle of water of this titanium oxide coating surface was measured and was found to have been greatly decreased to not more than 5 degrees, and the surface was hydrophilic.

The contact angle of water is measured with a contact angle meter (contact angle meter CA-A available from Kyowa Kaimen Kagaku Kabushiki Kaisha).

### EXAMPLE 2

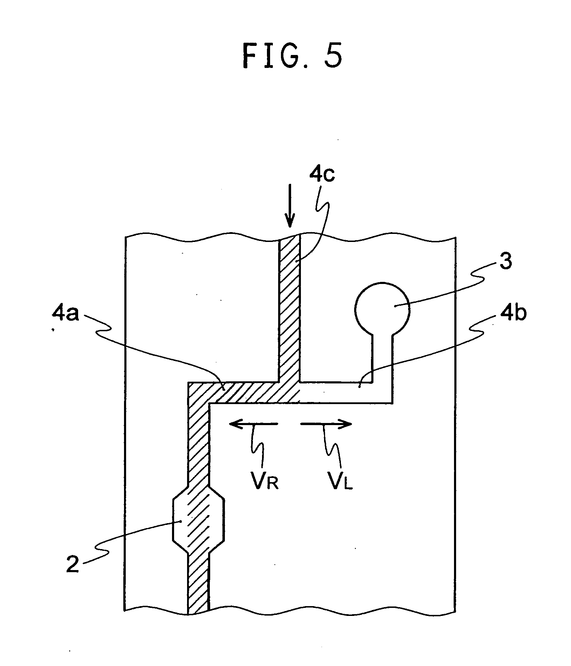

Titanium oxide was applied on a quartz glass substrate in a thickness of 500 nm by vapor deposition to produce a quartz glass substrate coated with titanium oxide, and a T-shaped microchannel (400 µm wide, 32 µm deep) of PDMS was adhered to the substrate to produce a test micro device shown in Fig. 5. Fig. 5 is a diagrammatic plan view, and the whole surface of the fluid passage is coated with hydrophobic titanium oxide.

A two-liquid silicone elastomer composition (SYLGARD 184 available from Dow Coming) comprising the following solutions A and B was used as PDMS. The solutions were mixed in a ratio of A:B of 10:1 (weight ratio) and heated at 70°C for one hour to produce PDMS.
Solution A:
Component A-1: Dimethylsiloxane terminated with dimethylvinyl group at its end
Component A-2: Silica subjected to dimethylvinylation or trimethylation
Component A-3: Tetrakis(trimethylsilyloxy)silane
Solution B:
Component B-1: Copolycondensation product of dimethylsiloxane and methylhydrosiloxane terminated with trimethylsilyl group at its end
Component B-2: 2,4,6,8-Tetramethyltetravinylcyclotetrasiloxane
Component B-3: Silica subjected to dimethylvinylation or trimethylation (same as Component A-2)
Component B-4: Dimethylsiloxane terminated with dimethylvinyl group at its end (same as Component A-1)

Water colored blue was injected into this test micro device from the channel 4c side at 50 µl/hour with a micro-syringe. Water flowed from the channel 4c to the channel 4a and channel 4b.

After removing water and drying, the shaded portion in the drawing was irradiated with ultraviolet laser beam (He-Cd laser) of 325 nm wavelength for one minute along the fluid passage. Then water colored blue was injected into the test micro device from the channel 4c side at 50 µl/hour with a micro-syringe. Water flowed from the channel 4c to the channel 4a at a flow rate of about 8 mm/ s, and thus it was confirmed that a switching function worked.

### EXAMPLE 3

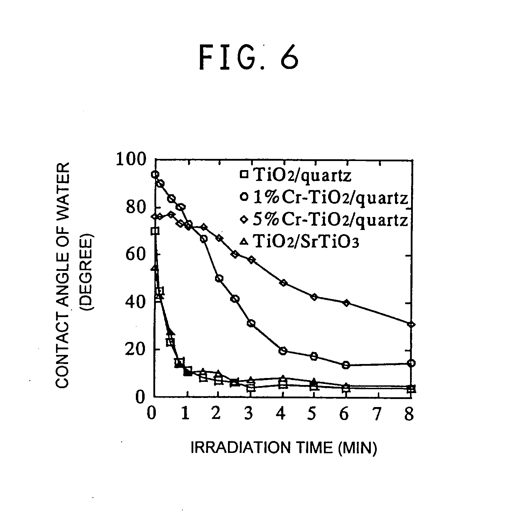

The following four substrates were irradiated with ultraviolet ray (black light of 254 nm wavelength, light source: 8W) from a distance of 2 mm. The contact angles of water of each substrate surface were measured with a lapse of time from initiation of the irradiation. The results are shown in Fig. 6.
Substrate 1: Quartz glass coated with titanium oxide (contact angle of water: 70 degrees)
Substrate 2: Quartz glass coated with 1 % Cr-doped titanium oxide (contact angle of water: 95 degrees)
Substrate 3: Quartz glass coated with 5 % Cr-doped titanium oxide (contact angle of water: 75 degrees)
Substrate 4: TiO₂/SrTiO₃ (contact angle of water: 60 degrees)

As shown in Fig. 6, it can be seen that the hydrophilization speeds of the quartz glass coated with titanium oxide (Substrate 1: D) and TiO₂/SrTiO₃ (Substrate 4: Δ) are very faster than those of the quartz glass coated with 1 % Cr-doped titanium oxide (Substrate 2: ○) and quartz glass coated with 5 % Cr-doped titanium oxide (Substrate 3: ◇).

### EXAMPLE 4

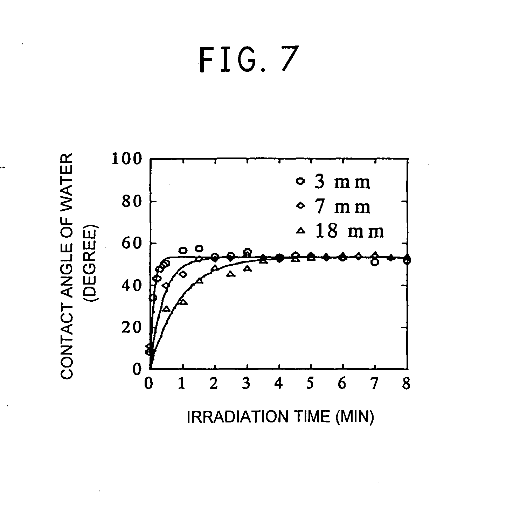

PDMS sheets' of 3 mm thick, 7 mm thick and 18 mm thick, respectively (obtained by forming the silicone elastomer composition used in Example 2 into a sheet) were placed on a quartz glass substrate coated with titanium oxide with a spacer (1 mm) provided between the sheet and the substrate, and the PDMS sheet was irradiated with ultraviolet ray (black light of 254 nm wavelength, light source: 8W). The contact angles of water of each substrate surface were measured with a lapse of time from initiation of the irradiation. The results are shown in Fig. 7.

In any of the PDMS sheets, the contact angles of the substrates were increased to about 53 degrees, and as shown in Fig. 7, the increasing rate of the 3 mm thick sheet was the highest.

When the 3 mm thick PDMS sheet was irradiated with ultraviolet ray in the same manner as above by using a spacer of 25 mm, the surface of the substrate was kept hydrophilic.

### EXAMPLE 5

A sheet-like article 1 having a hydrophilic surface was put in a polystyrene Petri dish of 90 mm diameter. A small vessel containing 100 µl of a material for controlling a contact angle of water was put in the same Petri dish and the dish was covered. After irradiating the whole Petri dish with ultraviolet ray (wavelength of 254 nm) at room temperature (25°C) for 30 minutes with an ultraviolet lamp, the sheet-like article was taken out. The contact angle of water of the top surface thereof was measured with the contact angle meter. The results are shown in Table 1.

The sheet-like article 1 used was obtained by irradiating a quartz glass substrate coated with titanium oxide in a thickness of 500 mm by vapor deposition with ultraviolet ray (wavelength of 254 nm) at room temperature (25°C) for 10 minutes with an ultraviolet lamp (Spectroline ENF280C available from Spectronics Corp.), thereby subjecting the titanium oxide surface to hydrophilization (contact angle of water: not more than 5 degrees).

**TABLE 1**

| | Material for controlling a contact angle of water | Light irradiation time 30 minutes |
|---|---|---|
| 1 | Dimethylsiloxane terminated with dimethylvinyl group at its end (68083-19-2) | 50.0 degrees |
| 2 | Tetrakis(trimethylsilyloxy)silane (3555-47-3) | 13.7 degrees |
| 3 | Copolycondensation product of dimethylsiloxane and methylhydrosiloxane terminated with trimethylsilyl group at its end (68037-59-2) | 13.7 degrees |
| 4 | Ethylene glycol (107-21-1) | 11.4 degrees |
| 5 | Catechol (120-80-9) | 10.6 degrees |
| 6 | Isovaleric aldehyde (590-86-3) | 26.8 degrees |

### EXAMPLE 6

The shaded portion of the test micro device shown in Fig. 5 and produced in Example 2 was irradiated with ultraviolet laser beam (He-Cd laser) of 325 nm wavelength at 1 min/spot for one minute along the fluid passage to make the channels 4c and 4a hydrophilic. Then ultrapure water colored blue was injected from the channel 4c side at 50 µl/hour with a micro-syringe. Ultrapure water flowed from the channel 4c to the channel 4a at a flow rate (V_{R}) of about 8 mm/s. The flow (V_{L}) to the channel 4b was zero.

Next, after removing water and drying, the channels 4c and 4b were irradiated with ultraviolet laser beam under the same conditions as above, and thus were made hydrophilic. Then ultrapure water colored blue was injected from the channel 4c side at 50 µl/hour with a micro-syringe. The flow (V_{R}) of ultrapure water flowing into the channel 4a side and the flow (V_{L}) of ultrapure water flowing into the channel 4b side were calculated by an image analysis, and a V_{L}/V_{R} ratio was 37. This result indicates that 97 % of the injected ultrapure water was flowed into the channel 4b subjected to hydrophilization, and it was confirmed that a switching function worked.

### INDUSTRIAL APPLICABILITY

According to the present invention, the inside of a microchannel can be easily subjected to hydrophilization and hydrophobilization in a noncontact manner without using a moving part, and there can be provided a method of control which enables a necessary amount of a fluid to be supplied at necessary time.

## Claims

1. A method of controlling a flow of a fluid which is **characterized in that** at least a part of a surface of a fluid passage is comprised of a substance being capable of changing a contact angle of water by irradiation of light and the contact angle of water of the substance for changing a contact angle of water is controlled so as to change the contact angle of water of its surface, thereby controlling a flow of a fluid.

2. A method of controlling a flow of a fluid in a microchannel which is **characterized in that** at least a part of a surface of the microchannel is a hydrophilization portion comprised of a substance being capable of decreasing a contact angle of water by irradiation of light and the hydrophilization portion is irradiated with light to decrease a contact angle of water of the surface thereof.

3. A method of controlling a flow of a fluid in a microchannel in which at least a part of a surface of the microchannel is a hydrophilization portion comprised of a substance being capable of decreasing a contact angle of water by irradiation of light; said method comprises:
(1) irradiating the hydrophilization portion with light to decrease a contact angle of water of the surface thereof,
(2) releasing a substance for increasing a contact angle of water from a material for controlling a contact angle of water which contains the substance for increasing a contact angle of water which provides a surface having a contact angle of water larger than that of the hydrophilization portion subjected to decreasing of a contact angle of water, and
(3) bringing the released substance for increasing a contact angle of water into contact with the surface of the hydrophilization portion to adhere the substance for increasing a contact angle of water to the surface of the hydrophilization portion, thereby increasing the contact angle of water of the surface.

4. The method of Claim 3, wherein said (3) is followed by (4) irradiation of light on the hydrophilization portion to which the substance for increasing a contact angle of water was adhered, to decrease the contact angle of water on the surface of the hydrophilization portion again.

5. The method of Claim 4, wherein a passage of a fluid in the microchannel is switched alternately by repeating said (2) to (4).

6. The method of any of Claims 1 to 5, wherein the substance being capable of decreasing a contact angle of water by irradiation of light is a substance having a photocatalytic action.

7. The method of any of Claims 1 to 6, wherein the substance being capable of decreasing a contact angle of water by irradiation of light is titanium oxide.

8. The method of any of Claims 3 to 7, wherein means to release the substance for increasing a contact angle of water from the material for controlling a contact angle of water is irradiation of light or heating.

9. The method of any of Claims 2 to 8, wherein a light source is a laser generator, an ultraviolet lamp or a mercury lamp.

10. The method of any of Claims 2 to 9, wherein the method of light irradiation is an irradiation method being capable of changing a focus in the depth direction.

11. The method of any of Claims 3 to 10, wherein the material for controlling a contact angle of water which contains the substance for increasing a contact angle of water comprises the substance for increasing a contact angle of water alone or is a liquid or solid containing the substance for increasing a contact angle of water.

12. The method of any of Claims 3 to 11, wherein the material for controlling a contact angle of water is polydimethylsiloxane containing the substance for increasing a contact angle of water.

13. The method of any of Claims 3 to 12, wherein the substance for increasing a contact angle of water is an organosilicon compound.

14. The method of any of Claims 3 to 13, wherein the portion other than the hydrophilization portion in the microchannel is made of the material for controlling a contact angle of water which contains the substance for increasing a contact angle of water.

15. The method of any of Claims 2 to 14, wherein a hydrophilic portion and a hydrophobic portion are selectively provided by selectively irradiating a specific region of the hydrophilization portion with light through a light-shielding pattern.

16. The method of any of Claims 3 to 15, wherein a hydrophilic portion and a hydrophobic portion are selectively provided by selectively applying light or heat on a specific region of the material for controlling a contact angle of water through a shielding pattern.

17. A valve provided in a passage of a fluid, wherein a part of an inner wall surface of the passage is comprised of a substance being capable of controlling a contact angle of water by irradiation of light and a fluid resistance in the passage of a fluid is controlled by controlling a contact angle of water of the inner wall surface comprised of the substance being capable of controlling a contact angle of water so as to differ from a contact angle of water of other inner wall surface.

18. The valve of Claim 17, wherein the substance being capable of controlling a contact angle of water is a substance which is capable of exhibiting both of hydrophilic property and photocatalytic action.

19. The valve of Claim 18, wherein the substance being capable of controlling a contact angle of water is titanium oxide.

20. A valve for a microchannel which is provided in the microchannel and has a hydrophobic portion and a hydrophilization portion, wherein the hydrophobic portion is made of a material for controlling a contact angle of water which can release a substance for increasing a contact angle of water by application of light or heat and the hydrophilization portion is made of a substance being capable of decreasing a contact angle of water by irradiation of light.

21. The valve of Claim 20, wherein the substance being capable of controlling a contact angle of water is a substance which is capable of exhibiting both of hydrophilic property and photocatalytic action.

22. The valve of Claim 21, wherein the substance being capable of controlling a contact angle of water is titanium oxide.

23. A micro device having the valve of any of Claims 17 to 22.

24. A microsensor having the valve of any of Claims 17 to 22.
